# EUROPÄISCHE PATENTANMELDUNG

(11) **EP 4 553 661 A1**
(43) Veröffentlichungstag der Anmeldung: **14.05.2025**
(21) Anmeldenummer: 23209280.9
(22) Anmeldetag: 11.11.2023
(51) Int. Cl.: G06F 11/16, G06F 11/22, G06F 11/30, G06F 11/32, G09G 3/00

(54) **VORRICHTUNG UND VERFAHREN ZUR ÜBERWACHUNG EINER DATENVERARBEITUNGSEINHEIT**

(71) Anmelder: RAFI GmbH & Co. KG, 88276 Berg (DE)
(72) Erfinder: Fleischer, Frank, 88368 Bergatreute (DE); Rathje, Sebastian, 89312 Günzburg (DE); Ummenhofer, Benjamin, 88356 Ostrach (DE); Gehweiler, Christian, 88255 Baindt (DE)
(74) Vertreter: Christ, Niko

(57) **Zusammenfassung**

Aufgrund der überschaubaren Kosten und ihrer Vielseitigkeit werden herkömmliche Rechnereinheiten gerne für unterschiedlichste Aufgaben herangezogen. Soweit diese Aufgaben allerdings auch sicherheitskritisch sind, ist es erforderlich, die Arbeit der Rechnereinheiten zu überprüfen. Dies betrifft insbesondere deren Bildschirmausgabe, auch aber nicht nur bei Touchscreen-Anwendungen. Wird aufgrund eines Fehlerfalls ein falsches Bild auf dem Bildschirm dargestellt und infolgedessen ein fehlerhafter Befehl über den Touchscreen eingegeben, so kann dies zu sicherheitskritischen Situationen führen. Bekannte Systeme verwenden hierfür sogenannte Watchdogs, die zwar die Rechnereinheit zyklisch prüfen, nicht aber die Bildschirmausgabe. Eine zusätzliche Prüfung des Bildschirms ist bekannt, aber aufwändig.

Die Erfindung sieht daher vor, dass auf einem Auswertebereich des Bildschirms kontinuierlich eine Folge farbiger Prüfsignale ausgegeben wird, die auch einer Auswerteeinheit bekannt ist. Die Auswerteeinheit überprüft diese Folge kontinuierlich und meldet, wenn von der Folge abgewichen wird, oder startet die Rechnereinheit dann neu. Da wegen der beiderseits bekannten Prüfsignalfolge eine Abstimmung der Auswerteeinheit mit der Rechnereinheit nicht erforderlich ist, kann eine solche Überprüfung erheblich einfacher und kostengünstiger erfolgen. Zudem kann aufgrund der Verwendung eines Farbsensors auch jeder einzelne Farbkanal geprüft werden.

## Beschreibung

Die vorliegende Erfindung betrifft eine Vorrichtung zur Überwachung einer wenigstens aus einer Rechnereinheit und einem mit dieser verbundenen Bildschirm bestehenden Datenverarbeitungseinrichtung, umfassend eine Auswerteeinheit, welcher mit wenigstens einem optischen Sensor datenverbunden ist, wobei der wenigstens eine optische Sensor zur Erfassung von Prüfsignalen einem Auswertebereich des Bildschirms zugeordnet ist, sowie ein solches Verfahren.

Eine solche Vorrichtung und ein solches Verfahren sind bereits aus der DE 102 29 342 A1 vorbekannt. Dort ist beschrieben, dass die zu überprüfende Rechnereinheit regelmäßig Signale zur Prüfung durch einen optischen Sensor ausgibt. Dies lässt sich jedoch nicht ohne Weiteres auf eine herkömmliche Datenverarbeitungseinheit übertragen, da es bei einer solchen zu Fehlern in der Übertragung kommen kann, etwa zu Fehlern bei der Übertragung zwischen der Rechnereinheit und ihrem Bildschirm. Die DE 102 29 342 A1 lehrt jedoch lediglich die Überprüfung der ansonsten sicher übertragenen Daten.

In diesem Zusammenhang wird als herkömmliche Datenverarbeitungseinheit etwa ein Personal Computer verstanden, welche beispielsweise mit embedded Linux als Betriebssystem arbeitet. Entsprechendes gilt jedoch auch für andere Betriebssysteme. Derartige Datenverarbeitungseinheiten sind kostengünstig, sehr verbreitet und arbeiten mit bekannten und bewährten Schnittstellen. Zudem werden noch Grafik-Frameworks wie z.B. Qt verwendet.

Da diese Software-Komponenten in der Regel nicht den Anforderungen der funktionalen Sicherheit entsprechen, müssen zusätzliche Maßnahmen ergriffen werden um sicherzustellen, dass die korrekten Bilddaten ausgegeben wurden und vor allem auch, dass die verwendeten Software Komponenten fehlerfrei funktionieren. Dies führt, wie bei der oben genannten Schrift dazu, dass mithilfe eines so genannten Watchdogs der Rechner überprüft wird, dessen an den Bildschirm übersandte Signale ausgelesen und mit den tatsächlich ausgegebenen Signalen verglichen werden müssen. Der Aufwand hierfür ist angesichts der mehreren erforderlichen Komponenten groß.

Bekannte Watchdogs erfordern, dass sie von der zu überwachenden Datenverarbeitungseinheit in regelmäßigen Abständen getriggert werden. Erhält der Watchdog nach einer bestimmten Zeit kein Statussignal der Datenverarbeitungseinheit, oder erhält er das Signal zu früh, so nimmt der Watchdog an, dass der Rechner nicht mehr fehlerfrei funktioniert. Je nach Einstellung kann eine Reaktion in Form einer Fehlermeldung oder auch eine direkte Veranlassung von Maßnahmen bis hin zum Stillsetzen oder Neustart der Datenverarbeitungseinheit erfolgen.

Ferner besteht die Problematik, dass eine Darstellung auf dem Bildschirm auch bereits durch den Ausfall einzelner Farbkanäle stark beeinträchtigt sein kann. Erfolgt eine Darstellung einer Information etwa in roter Farbe und tritt in einer Datenleitung zwischen Rechnereinheit und Bildschirm ein Defekt in der roten Datenleitung auf, so kann es sein, dass die benötigte Information nicht mehr oder nicht mehr deutlich genug auf dem Bildschirm dargestellt wird. Bei den häufig in roter Farbe dargestellten Warnmeldungen kann dies zu einem sicherheitsrelevanten Fehler führen. Bei einer rein Schwarz-weißen Prüfung, welche keine Notiz von Farbfehlern nehmen kann, wird ein solcher Fehler jedoch nicht erkannt.

Vor diesem Hintergrund liegt der vorliegenden Erfindung die Aufgabe zu Grunde, eine Vorrichtung und ein Verfahren zur Überwachung einer Datenverarbeitungseinheit zu schaffen, bei denen sowohl eine Überwachung des Rechners und dessen Datenübertragung, als auch eine Überwachung der korrekten Bildschirmausgabe mit nur einer Komponente erfolgt, welche auch eine Kontrolle der farblich korrekten Darstellung mit einschließt.

Gelöst wird diese Aufgabe durch eine Vorrichtung zur Überwachung einer Datenverarbeitungseinrichtung gemäß den Merkmalen des unabhängigen Anspruchs 1, sowie durch ein entsprechendes Verfahren gemäß den Merkmalen des nebengeordneten Anspruchs 9. Sinnvolle Ausgestaltungen sowohl der Vorrichtung als auch des Verfahrens können den sich jeweils anschließenden abhängigen Ansprüchen entnommen werden.

Vorgeschlagen wird insoweit eine Vorrichtung zur Überwachung einer wenigstens aus einer Rechnereinheit und einem mit dieser verbundenen Bildschirm bestehenden Datenverarbeitungseinrichtung, umfassend eine Auswerteeinheit, welcher mit wenigstens einem optischen Sensor datenverbunden ist, wobei der wenigstens eine optische Sensor zur Erfassung von Prüfsignalen einem Auswertebereich des Bildschirms zugeordnet ist. Diese ist erfindungsgemäß dadurch gekennzeichnet, dass auf der Rechnereinheit eine Software mit einer Bildschirmausgabe abläuft, welche die kontinuierliche Ausgabe einer zeitlichen Abfolge von farbigen Prüfsignalen auf dem Auswertebereich des Bildschirms umfasst, wobei der Auswerteeinheit ein Zeitgeber zugeordnet ist, anhand dessen Zeitsignal eine Frequenz der Prüfsignale durch die Auswerteeinheit überprüfbar ist und wobei es sich bei dem wenigstens einen optischen Sensor um wenigstens einen Farbsensor handelt, anhand dessen Signalen eine Farbgebung der Prüfsignale durch die Auswerteeinheit überprüfbar ist.

Im Hinblick auf das Verfahren ist die Erfindung dadurch gekennzeichnet, dass auf der Rechnereinheit eine Software mit einer Bildschirmausgabe abläuft, welche eine hinterlegte, kontinuierliche Folge von farbigen Prüfsignalen auf dem Auswertebereich des Bildschirms ausgibt und der wenigstens eine optische Sensor die Prüfsignale nach ihrer Farbgebung erfasst und die Auswerteeinheit mithilfe eines Zeitgebers die Einhaltung der in der Auswerteeinheit identisch hinterlegten, kontinuierlichen Folge von farbigen Prüfsignalen nach Farbgebung, Reihenfolge und Zeitpunkt überprüft.

Es wird also vonseiten der Rechnereinheit in einem definierten Auswertebereich kontinuierlich ein Prüfsignal ausgegeben, welches mithilfe eines optischen Sensors erfasst und an die Auswerteeinheit weitergeleitet wird. Es kann sich bei dem Prüfsignal insbesondere um eine Folge von farbigen Signalen handeln, die zu bestimmten Zeitpunkten ausgegeben werden, so dass auch eine Abweichung von der Reihenfolge der Farben bereits auf einen Fehler geschlossen werden kann. Auf einem Bildschirm kann der Auswertebereich beispielsweise eine Größe von fünf mal fünf Millimetern einnehmen, welcher etwa vollflächig in einer Farbe ausgefüllt wird. Eine mögliche Folge wäre rot - grün - blau, mit einem Farbwechsel alle 100 Millisekunden, wobei sich diese Folge fortwährend wiederholt. Kann nun nach der Phase mit blauem Signal innerhalb des angegebenen Zeitrahmens kein rotes Signal festgestellt werden, so kann dies auf einen Defekt der Farbleitung zurückzuführen sein, wenn jedoch auch keine andere Farbe mehr nachfolgt, liegt möglicherweise ein Systemabsturz der Rechnereinheit vor. Wechselt der Bildschirm im Auswertebereich auf schwarz, so kann dies auf einen Ausfall der Signalleitung oder der Rechnereinheit oder deren Komponenten wie etwa die Grafikkarte hindeuten. Ein zu langsamer oder schneller Wechsel hingegen deutet auf einen Fehler des Programmflusses oder des Betriebssystems hin.

Alle diese Fälle können jedoch von der erfindungsgemäßen Vorrichtung, beziehungsweise mithilfe des erfindungsgemäßen Verfahrens, detektiert werden. Insgesamt arbeitet die Erfindung mit der Annahme, dass wenn die erwartete Anzeige in dem Auswertebereich korrekt dargestellt ist, dann auch die übrigen Bereiche des Bildschirms ebenso korrekt funktionieren. Ein Ausfall von Teilbereichen des Bildschirms kann mit dem erfindungsgemäßen Verfahren hingegen nur dann erfasst werden, wenn dieser Ausfall den Teilbereich mit dem Auswertebereich betrifft.

In einer konkreten Ausgestaltung kann vorgesehen sein, dass der Auswerteeinheit ein Speicher zugeordnet ist, in welchem eine Folge von Referenzsignalen zum Abgleich mit den erfassten Prüfsignalen des wenigstens einen optischen Sensors nach Helligkeit, Farbe und Zeitpunkt hinterlegt ist. Hierbei handelt es sich um die identische Signalfolge wie von der Software erzeugt wird, die auf der Rechnereinheit abläuft und die Signale auf dem Bildschirm erzeugt. Eingangs einer Prüfung muss lediglich mit einem herkömmlichen Verfahren eine Synchronisierung zwischen den auf dem Bildschirm dargestellten Signalen und den erwarteten Signalen erfolgen, dann aber dürfen keine Abweichungen mehr auftreten.

Bevorzugtermaßen kann vorgesehen sein, dass dem Auswertebereich des Bildschirms mehrere optische Sensoren zugeordnet sind, die zu einem Array zusammengefasst sind, wobei vorzugsweise der Auswertebereich des Bildschirms in mehrere Teilbereiche unterteilt ist, wobei jedem optischen Sensor des Arrays ein Teilbereich des Auswertebereichs zugeordnet ist. Je mehr auch unterschiedliche Signale mithilfe weiterer Sensoren abgegriffen werden, desto sicherer ist die Aussage, dass der Bildschirm zu einem bestimmten Zeitpunkt funktioniert.

Weiter kann in einer konkreten baulichen Ausgestaltung vorgesehen sein, dass der wenigstens eine optische Sensor auf dem Auswertebereich des Bildschirms aufgesetzt ist, wobei vorzugsweise auf dem wenigstens einen optischen Sensor eine Deckschicht zur Verdeckung des optischen Sensors, vorzugsweise durch Bedrucken, aufgebracht ist. Zum Einen benötigt der Sensor einen unverstellten Blick auf den Auswertebereich, so dass eine Installation des Sensors unmittelbar über dem Auswertebereich eine geeignete Lösung darstellt. Jedoch kann dann der Sensor gesehen werden, was bei einem ansonsten schwarzen Bildschirm mit den gewünschten Bilddaten störend sein kann. Durch eine Verdeckung des Sensors mit einer Deckschicht kann dafür gesorgt werden, dass der Betrachter von der erfindungsgemäßen Vorrichtung nichts, zumindest aber nur die unauffällig gestaltete Deckschicht, sehen kann. Neben einem Bedrucken des Bereichs kann auch ein Bekleben, Bedampfen oder ein anderes Zwischenlegen der Deckschicht vorgenommen werden, Dies kann auch sowohl auf eine Rückseite des Sensors, gegebenenfalls auf dessen Leiterplatte, aber auch auf die Unterseite des über dem Bildschirm liegenden Frontglases erfolgen.

Weiter kann die Deckschicht einen um den Bildschirm umlaufenden Bildschirmrand umfassen, welcher den Bildschirm wenigstens im Bereich des wenigstens einen optischen Sensors überlappt. Dadurch, dass ein Teil des Bildschirms unter einem Bildschirmrand verdeckt bleibt, ist dieser zwar nicht für eine Anzeige verfügbar, soweit dies jedoch verschmerzbar ist, kann in diesem Bereich der Auswertebereich angeordnet und durch den kompletten Bildschirmrand verdeckt werden. Dies erlaubt hierbei auch einen deutlich größeren oder auch mehrere Auswertebereiche.

In einer alternativen Ausgestaltung kann es auch sinnvoll sein, wenn der wenigstens eine optische Sensor neben dem Bildschirm angeordnet und durch eine Zwischenschaltung wenigstens eines Lichtleitelements dem Auswertebereich des Bildschirms zugeordnet ist. Hierdurch bleibt der Blick des Betrachters auf den Bildschirm frei zugänglich und das Lichtleitelement bringt das Licht des Auswertebereichs zu dem abseits liegenden optischen Sensor. Der Benutzer kann den Auswertebereich dadurch sehen. Sofern dieser Bereich dennoch unauffällig gestaltet werden soll, können die Prüfsignale jeweils so kurz ausgegeben werden, dass sie durch den Betrachter kaum oder gar nicht wahrgenommen werden.

Insbesondere kann es vorgesehen sein, dass der Bildschirm von einem Touchsensor übergriffen ist, welcher unter Zwischenlage einer transparenten Kleberschicht auf dem Bildschirm aufgebracht ist, wobei der optische Sensor in der Ebene der transparenten Kleberschicht über dem Auswertebereich des Bildschirms angeordnet ist. Sensor und Auswertebereich fügen sich dadurch nahtlos nicht nur auf einer reinen Anzeige ein, sondern auch in ein Bedienelement, bei dem eine korrekte Anzeige besonders wichtig ist und die richtige aktuelle Beschriftung der Touchelemente sichergestellt werden muss.

Für eine Reaktion der Auswerteeinheit auf einen festgestellten Fehler kann zunächst vorgesehen sein, dass der Auswerteeinheit Mittel zum Zurücksetzen der Rechnereinheit in einen Initialzustand zugeordnet sind. Es erfolgt also ein Reset der Rechnereinheit, wodurch im Falle eines Systemabsturzes in vielen Fällen eine Problembehebung bewirkt werden kann. Alternativ kann unproblematisch auch nur eine Fehlermeldung der Auswerteeinheit oder der Rechnereinheit erfolgen, welche optisch, akustisch oder funktionell durch ein Blockieren der betroffenen Funktionen erfolgen kann, wodurch ein sicherer Zustand des Gesamtsystems eingenommen werden kann.

Die vorstehend beschriebene Erfindung wird im Folgenden anhand eines Ausführungsbeispiels näher erläutert.

Es zeigen
- Figur 1: eine Datenverarbeitungseinrichtung mit einer Auswerteeinheit in einem schematischen Funktionsschaubild,
- Figur 2: eine Darstellung eines Bildschirms in einer schematischen Frontalansicht, sowie
- Figur 3: ein Schichtenmodell des Bildschirms in einer seitlichen Querschnittsdarstellung.

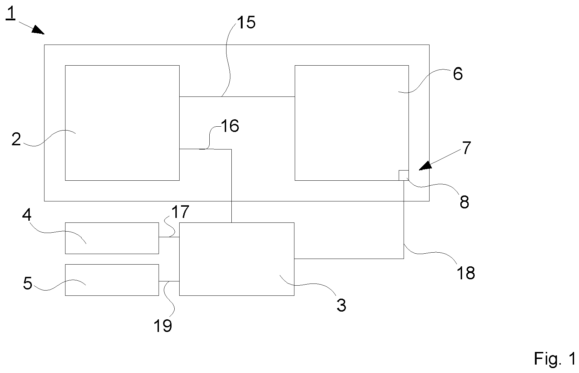

Figur 1 zeigt eine Datenverarbeitungseinrichtung 1, welche im Wesentlichen aus einer Rechnereinheit 2 und einem Bildschirm 6 besteht, welche miteinander derart datenverbunden sind, dass der Bildschirm 6 von der Rechnereinheit 2 erzeugte Bildsignale 15 ausgibt. Es kann sich hierbei um einen Touchscreen an einem Fahrzeug handeln, welches Steuerelemente des Fahrzeugs umsetzt. Hierbei verhält es sich so, dass mögliche Befehle zur Eingabe vorformuliert sind und diese auf eine Berührung des als Touchscreen ausgestalteten Bildschirms 6 hin ausgeführt werden. Wichtig ist insbesondere bei einem Betrieb des Fahrzeugs, dass die Darstellung auf dem Bildschirm 6 korrekt ist und der Benutzer nicht auf veraltete Daten schaut, wodurch er, wenn das System der Rechnereinheit 2 bereits von einer anderen Darstellung ausgeht als für den Benutzer sichtbar, möglicherweise falsche Befehle eingibt. Als Rechnereinheit 2 werden bevorzugt sogenannte eingebettete Systeme wie beispielsweise embedded Linux eingesetzt, welches jedoch kein sicheres System darstellt. Es erfolgt per se keine Überprüfung, dass die von der Rechnereinheit 2 dargestellten Daten auch tatsächlich korrekt auf dem Bildschirm 6 ausgegeben werden. Eine solche Überprüfung stellt die Erfindung bereit.

Diese erfolgt mithilfe einer Auswerteeinheit 3, welche an verschiedenen Schnittstellen mit der Datenverarbeitungseinrichtung 1 zusammenwirkt. Zunächst ist vorgesehen, dass die Bildsignale 15, welche die Rechnereinheit 2 an den Bildschirm 6 übermittelt, innerhalb eines Auswertebereichs 7 ein Prüfsignal 18 ausgibt, welches etwa in einer vollflächigen farbigen Füllung des Auswertebereichs 7 zu einem bestimmten Zeitpunkt und vorzugsweise für einen bestimmten Zeitraum bestehen kann. Ein solches Prüfsignal 18 wird kontinuierlich ausgegeben, so dass permanent von der Auswerteeinheit 3 überprüft werden kann, ob die Rechnereinheit 2 sowie der Bildschirm 6 und dessen Bildsignale 15 weiterhin betriebsbereit sind.

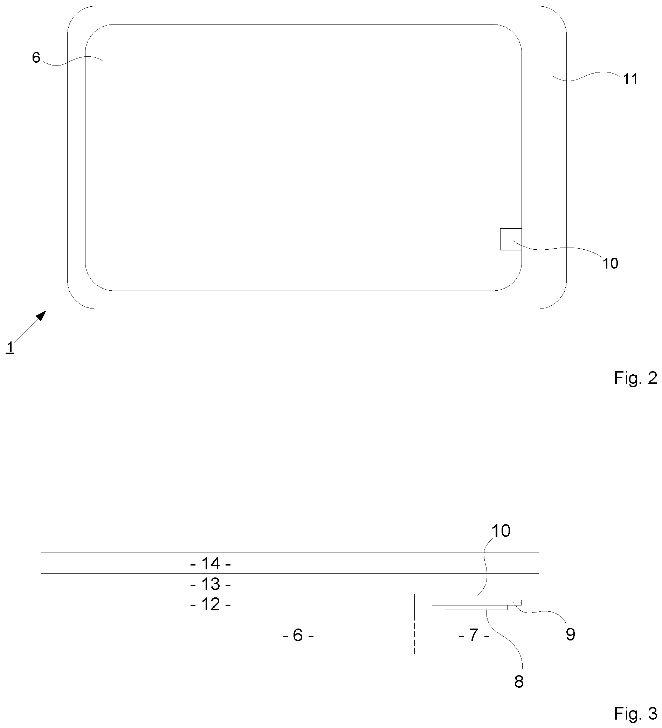

Eine solche Überprüfung erfordert, dass die Auswerteeinheit 3 mit wenigstens einem optischen Sensor 8 verbunden ist, welcher in der hier dargestellten Ausgestaltung direkt auf dem Bildschirm 6 in dem Auswertebereich 7 des Bildschirms 6 angebracht ist. Der Auswertebereich 7 des Bildschirms 6 ist zumindest näherungsweise 5x5mm groß und befindet sich vorteilhafterweise am Rand des Bildschirms. Dies ist auch in Figur 2 dargestellt, wo der Auswertebereich 7 in der rechten unteren Ecke des Bildschirms 6 vorgesehen ist. Dort kann auch erkannt werden, dass der Auswertebereich 7 mit einer Deckschicht 10 in Form einer dunklen Bedruckung versehen ist, so dass der optische Sensor 8 unterhalb der Deckschicht 10 nicht von außen gesehen werden kann. Auch könnte der Auswertebereich 7 mit dem darüber angeordneten optischen Sensor 8 unter einem direkt unter einem Frontglas 14 angeordneten durchgehenden Bildschirmrand 11 angeordnet sein, so dass keine separate Abdeckung benötigt wird.

Das in dem Auswertebereich 7 angelegte Prüfsignal 18 umfasst eine gespeicherte Folge, wie etwa eine vollflächige Ausgabe in rot, dann bedarfsweise nach einer Pause grün und schließlich blau. Von der vollflächigen Darstellung ist nur der Auswertebereich 7 betroffen, zudem kann die Ausgabe so kurz sein, dass sie kaum wahrzunehmen ist. Mithilfe des über dem Auswertebereich 7 angeordneten optischen Sensors 8 wird das Prüfsignal 18 optisch erfasst und als Messwert an die Auswerteeinheit 3 übermittelt. Die Auswerteeinheit 3 weist einen Speicher 5 auf, in welchem das identische Prüfsignal 18 als Referenzsignal 19 gespeichert ist, welches auch die Software der Rechnereinheit 2 verwendet. Durch einen Vergleich der gemessenen Prüfsignale 18 mit den im Speicher 5 vorgehaltenen Referenzsignalen 19 kann festgestellt werden, ob die Prüfsignale 18 weiterhin ordnungsgemäß ausgegeben werden. Kann im Vergleich kein Unterschied festgestellt werden, so wird angenommen, dass neben dem Auswertebereich 7 auch der restliche Bildschirm 6 ordnungsgemäß arbeitet, da die Rechnereinheit 2 stets die kompletten Bilddaten für den gesamten Bildschirminhalt überträgt.

Ausgewertet werden die Prüfsignale 18 zumindest hinsichtlich der Farbwerte, des Zeitpunkts des Auftretens eines Prüfsignals 18 und bedarfsweise auch hinsichtlich der Helligkeit. Dadurch, dass die Prüfsignale 18 nacheinander unterschiedliche Farben durchlaufen, kann festgestellt werden, ob einzelne Farbkanäle des Bildschirms korrekt angesteuert werden. Durch eine Prüfung der Helligkeit kann zudem auch die korrekte Funktion des Backlights von dem Bildschirm 6 sichergestellt werden. Erfolgt die Ausgabe eines Prüfsignals 18 in einer falschen Farbe, so kann daraus geschlossen werden, dass ein Defekt zumindest an dem fraglichen Farbkanal vorliegt. Vor diesem Hintergrund ist es besonders hilfreich, wenn die Prüfsignale jeweils entweder nur genau einen der Farbkanäle ansteuern, oder aber alle Farbkanäle, wobei dennoch für jeden Farbkanal eine eigene Auswertung der Prüfsignale 18 erfolgt. Wartet die Auswerteeinheit 3 zu lange auf ein neues Prüfsignal 18 oder kommt es zu früh oder für eine bestimmte Zeit gar nicht mehr, so kann ein Systemabsturz oder eine Unterbrechung der Verbindung der Rechnereinheit 2 zum Bildschirm 6 vorliegen, ein Fehler in der Grafikeinheit und andere weitere Fehler. Die korrekte Zeitermittlung erfolgt mithilfe eines Zeitgebers 4, welcher ein Zeitsignal 17 an die Auswerteeinheit 3 anlegt.

Stellt schließlich die Auswerteeinheit 3 fest, dass die Ausgabe auf dem Bildschirm 6 nicht mehr korrekt abläuft, so kann sie ein Alarmsignal ausgeben. Sofern darüber hinaus auch direkt ein Eingriff gewünscht ist, kann etwa ein Rücksetzsignal 16 ausgegeben werden, welches die Rechnereinheit neu startet.

Figur 3 zeigt einen schematischen Querschnitt durch den Bildschirm 6 und die über diesem liegenden Schichten, soweit es sich bei dem Bildschirm 6 um ein erfindungsgemäßes Touchscreen-Gerät handelt. Über dem eigentlichen Bildschirm 6, welcher in einem Randbereich den beschriebenen Auswertebereich 7 ausbildet, ist der optische Sensor 8 angeordnet, welcher auf den Auswertebereich 7 des Bildschirms 6 blickt. Diese Anordnung liegt zwischen dem Bildschirm 6 und einem Touchsensor 13, insbesondere in der Ebene einer zwischenliegenden vermittelnden und transparenten Kleberschicht 12 oder einer Ebene eines Luftspalts zwischen Bildschirm 6 und Touchscreen-Sensor. Aufgrund der Deckschicht 10 kann durch das abschließend aufgebrachte Frontglas 14 hindurch der optische Sensor von außen nicht wahrgenommen werden. Die Überprüfung der Funktionsfähigkeit der Datenverarbeitungseinrichtung 1 kann somit kontinuierlich unbemerkt von einem Benutzer ablaufen.

Vorstehend beschrieben ist somit eine Vorrichtung und ein Verfahren zur Überwachung einer Datenverarbeitungseinheit, bei denen sowohl eine Überwachung des Rechners und dessen Datenübertragung, als auch eine Überwachung der korrekten Bildschirmausgabe mit nur einer Komponente erfolgt, welche auch eine Kontrolle der farblich korrekten Darstellung mit einschließt

### BEZUGSZEICHENLISTE

- 1: Datenverarbeitungseinrichtung
- 2: Rechnereinheit
- 3: Auswerteeinheit
- 4: Zeitgeber
- 5: Speicher
- 6: Bildschirm
- 7: Auswertebereich
- 8: optischer Sensor
- 10: Deckschicht
- 11: Bildschirmrand
- 12: transparente Kleberschicht oder Luftspalt
- 13: Touchsensor
- 14: Frontglas
- 15: Bildsignal
- 16: Rücksetzsignal
- 17: Zeitsignal
- 18: Prüfsignal
- 19: Referenzsignal

## Patentansprüche

1. Vorrichtung zur Überwachung einer wenigstens aus einer Rechnereinheit (2) und einem mit dieser verbundenen Bildschirm (6) bestehenden Datenverarbeitungseinrichtung (1), umfassend eine Auswerteeinheit (3), welcher mit wenigstens einem optischen Sensor (8) datenverbunden ist, wobei der wenigstens eine optische Sensor (8) zur Erfassung von Prüfsignalen (18) einem Auswertebereich (7) des Bildschirms (6) zugeordnet ist,
**dadurch gekennzeichnet, dass** auf der Rechnereinheit (2) eine Software mit einer Bildschirmausgabe abläuft, welche die kontinuierliche Ausgabe einer zeitlichen Abfolge von farbigen Prüfsignalen (18) auf dem Auswertebereich (7) des Bildschirms (6) umfasst, wobei der Auswerteeinheit (3) ein Zeitgeber (4) zugeordnet ist, anhand dessen Zeitsignal (17) eine Frequenz der Prüfsignale (18), sowie vorzugsweise deren Helligkeit, durch die Auswerteeinheit (3) überprüfbar ist und wobei es sich bei dem wenigstens einen optischen Sensor (8) um wenigstens einen Farbsensor handelt, anhand dessen Signalen eine Farbgebung der Prüfsignale (18) durch die Auswerteeinheit (3) überprüfbar ist.

2. Vorrichtung gemäß Anspruch 1, **dadurch gekennzeichnet, dass** der Auswerteeinheit (3) ein Speicher (5) zugeordnet ist, in welchem eine Folge von Referenzsignalen (19) zum Abgleich mit den erfassten Prüfsignalen (18) des wenigstens einen optischen Sensors (8) nach Helligkeit, Farbe und Zeitpunkt hinterlegt ist.

3. Vorrichtung gemäß einem der Ansprüche 1 oder 2, **dadurch gekennzeichnet, dass** dem Auswertebereich (7) des Bildschirms (6) mehrere optische Sensoren (8) zugeordnet sind, die zu einem Array zusammengefasst sind, wobei vorzugsweise der Auswertebereich (7) des Bildschirms (6) in mehrere Teilbereiche unterteilt ist, wobei jedem optischen Sensor (8) des Arrays ein Teilbereich des Auswertebereichs (7) zugeordnet ist.

4. Vorrichtung gemäß einem der vorhergehenden Ansprüche, **dadurch gekennzeichnet, dass** der wenigstens eine optische Sensor (8) auf dem Auswertebereich (7) des Bildschirms (6) aufgesetzt ist, wobei vorzugsweise auf dem wenigstens einen optischen Sensor (8) eine Deckschicht (10) zur Verdeckung des optischen Sensors (8), vorzugsweise durch Bedrucken, aufgebracht ist.

5. Vorrichtung gemäß Anspruch 4, **dadurch gekennzeichnet, dass** die Deckschicht (10) einen um den Bildschirm (6) umlaufenden Bildschirmrand (11) umfasst, welcher den Bildschirm (6) wenigstens im Bereich des wenigstens einen optischen Sensors (8) überlappt.

6. Vorrichtung gemäß einem der Ansprüche 1 bis 3, **dadurch gekennzeichnet, dass** der wenigstens eine optische Sensor (8) neben dem Bildschirm (6) angeordnet und durch eine Zwischenschaltung wenigstens eines Lichtleitelements dem Auswertebereich (7) des Bildschirms (6) zugeordnet ist.

7. Vorrichtung gemäß einem der vorhergehenden Ansprüche, **dadurch gekennzeichnet, dass** der Bildschirm (6) von einem Touchsensor (13) übergriffen ist, welcher unter Zwischenlage einer transparenten Kleberschicht (12), oder mit einem Luftspalt, auf dem Bildschirm (6) aufgebracht ist, wobei der optische Sensor (8) in der Ebene der transparenten Kleberschicht oder des Luftspalts (12) über dem Auswertebereich (7) des Bildschirms (6) angeordnet ist.

8. Vorrichtung gemäß einem der vorhergehenden Ansprüche, **dadurch gekennzeichnet, dass** der Auswerteeinheit (3) Mittel zum Zurücksetzen der Rechnereinheit (2) in einen Initialzustand oder einen sicheren Zustand zugeordnet sind.

9. Verfahren zur Überwachung einer wenigstens aus einer Rechnereinheit (2) und einem mit dieser verbundenen Bildschirm (6) bestehenden Datenverarbeitungseinrichtung (1), wobei dem Bildschirm (6) wenigstens ein optischer Sensor (8) zugeordnet ist, welcher einen von dem wenigstens einen optischen Sensor (8) erfassten Auswertebereich (7) des Bildschirms (6) überwacht und erfasste Prüfsignale (18) an eine Auswerteeinheit (3) übermittelt,
**dadurch gekennzeichnet, dass** auf der Rechnereinheit (2) eine Software mit einer Bildschirmausgabe abläuft, welche eine hinterlegte, kontinuierliche Folge von farbigen Prüfsignalen (18) auf dem Auswertebereich (7) des Bildschirms (6) ausgibt und der wenigstens eine optische Sensor (8) die Prüfsignale (18) nach ihrer Farbgebung erfasst und die Auswerteeinheit (3) mithilfe eines Zeitgebers (4) die Einhaltung der in der Auswerteeinheit (3) identisch hinterlegten, kontinuierlichen Folge von farbigen Prüfsignalen (18) nach Farbgebung, Reihenfolge und Zeitpunkt überprüft.

10. Verfahren gemäß Anspruch 9, **dadurch gekennzeichnet, dass** der wenigstens eine optische Sensor (8) die Helligkeit der Prüfsignale (18) erfasst und die Auswerteeinheit (3) zusätzlich den Helligkeitswert der Prüfsignale (18) überprüft.

11. Verfahren gemäß einem der Ansprüche 9 oder 10, **dadurch gekennzeichnet, dass** die Auswerteeinheit (3) die Überprüfung durch einen Vergleich der erfassten Prüfsignale (18) mit einer Referenzsignalfolge (19) durchführt, welche in einem der Auswerteeinheit (3) zugeordneten Speicher (5) hinterlegt ist.

12. Verfahren gemäß einem der Ansprüche 8 bis 11, **dadurch gekennzeichnet, dass** die Auswerteeinheit (3) die Rechnereinheit (2) zurücksetzt oder in einen sicheren Zustand versetzt, wenn sie im Rahmen der Überprüfung eine Abweichung der Prüfsignale (18) von der Referenzsignalfolge (19) feststellt.

## Geänderte Patentansprüche

### Geänderte Patentansprüche gemäss Regel 137(2) EPÜ.

1. Vorrichtung zur Überwachung einer wenigstens aus einer Rechnereinheit (2) und einem mit dieser verbundenen Bildschirm (6) bestehenden Datenverarbeitungseinrichtung (1), umfassend eine Auswerteeinheit (3), welcher mit wenigstens einem optischen Sensor (8) datenverbunden ist, wobei der wenigstens eine optische Sensor (8) zur Erfassung von Prüfsignalen (18) einem Auswertebereich (7) des Bildschirms (6) zugeordnet ist,
**dadurch gekennzeichnet, dass** auf der Rechnereinheit (2) eine Software mit einer Bildschirmausgabe abläuft, welche die kontinuierliche Ausgabe einer zeitlichen Abfolge von farbigen Prüfsignalen (18) auf dem Auswertebereich (7) des Bildschirms (6) umfasst, wobei der Auswerteeinheit (3) ein Zeitgeber (4) zugeordnet ist, anhand dessen Zeitsignal (17) eine Frequenz der Prüfsignale (18), sowie vorzugsweise deren Helligkeit, durch die Auswerteeinheit (3) überprüfbar ist und wobei es sich bei dem wenigstens einen optischen Sensor (8) um wenigstens einen Farbsensor handelt, anhand dessen Signalen eine Farbgebung der Prüfsignale (18) durch die Auswerteeinheit (3) überprüfbar ist und der Auswerteeinheit (3) ein Speicher (5) zugeordnet ist, in welchem eine Folge von Referenzsignalen (19) zum Abgleich mit den erfassten Prüfsignalen (18) des wenigstens einen optischen Sensors (8) nach Helligkeit, Farbe und Zeitpunkt hinterlegt ist.

2. Vorrichtung gemäß Anspruch 1, **dadurch gekennzeichnet, dass** dem Auswertebereich (7) des Bildschirms (6) mehrere optische Sensoren (8) zugeordnet sind, die zu einem Array zusammengefasst sind, wobei vorzugsweise der Auswertebereich (7) des Bildschirms (6) in mehrere Teilbereiche unterteilt ist, wobei jedem optischen Sensor (8) des Arrays ein Teilbereich des Auswertebereichs (7) zugeordnet ist.

3. Vorrichtung gemäß einem der vorhergehenden Ansprüche, **dadurch gekennzeichnet, dass** der wenigstens eine optische Sensor (8) auf dem Auswertebereich (7) des Bildschirms (6) aufgesetzt ist, wobei vorzugsweise auf dem wenigstens einen optischen Sensor (8) eine Deckschicht (10) zur Verdeckung des optischen Sensors (8), vorzugsweise durch Bedrucken, aufgebracht ist.

4. Vorrichtung gemäß Anspruch 3, **dadurch gekennzeichnet, dass** die Deckschicht (10) einen um den Bildschirm (6) umlaufenden Bildschirmrand (11) umfasst, welcher den Bildschirm (6) wenigstens im Bereich des wenigstens einen optischen Sensors (8) überlappt.

5. Vorrichtung gemäß einem der Ansprüche 1 oder 2, **dadurch gekennzeichnet, dass** der wenigstens eine optische Sensor (8) neben dem Bildschirm (6) angeordnet und durch eine Zwischenschaltung wenigstens eines Lichtleitelements dem Auswertebereich (7) des Bildschirms (6) zugeordnet ist.

6. Vorrichtung gemäß einem der vorhergehenden Ansprüche, **dadurch gekennzeichnet, dass** der Bildschirm (6) von einem Touchsensor (13) übergriffen ist, welcher unter Zwischenlage einer transparenten Kleberschicht (12), oder mit einem Luftspalt, auf dem Bildschirm (6) aufgebracht ist, wobei der optische Sensor (8) in der Ebene der transparenten Kleberschicht oder des Luftspalts (12) über dem Auswertebereich (7) des Bildschirms (6) angeordnet ist.

7. Vorrichtung gemäß einem der vorhergehenden Ansprüche, **dadurch gekennzeichnet, dass** der Auswerteeinheit (3) Mittel zum Zurücksetzen der Rechnereinheit (2) in einen Initialzustand oder einen sicheren Zustand zugeordnet sind.

8. Verfahren zur Überwachung einer wenigstens aus einer Rechnereinheit (2) und einem mit dieser verbundenen Bildschirm (6) bestehenden Datenverarbeitungseinrichtung (1), wobei dem Bildschirm (6) wenigstens ein optischer Sensor (8) zugeordnet ist, welcher einen von dem wenigstens einen optischen Sensor (8) erfassten Auswertebereich (7) des Bildschirms (6) überwacht und erfasste Prüfsignale (18) an eine Auswerteeinheit (3) übermittelt,
**dadurch gekennzeichnet, dass** auf der Rechnereinheit (2) eine Software mit einer Bildschirmausgabe abläuft, welche eine hinterlegte, kontinuierliche Folge von farbigen Prüfsignalen (18) auf dem Auswertebereich (7) des Bildschirms (6) ausgibt und der wenigstens eine optische Sensor (8) die Prüfsignale (18) nach ihrer Farbgebung erfasst und die Auswerteeinheit (3) mithilfe eines Zeitgebers (4) die Einhaltung der in der Auswerteeinheit (3) identisch hinterlegten, kontinuierlichen Folge von farbigen Prüfsignalen (18) nach Farbgebung, Reihenfolge und Zeitpunkt überprüft.

9. Verfahren gemäß Anspruch 8, **dadurch gekennzeichnet, dass** der wenigstens eine optische Sensor (8) die Helligkeit der Prüfsignale (18) erfasst und die Auswerteeinheit (3) zusätzlich den Helligkeitswert der Prüfsignale (18) überprüft.

10. Verfahren gemäß einem der Ansprüche 8 oder 9, **dadurch gekennzeichnet, dass** die Auswerteeinheit (3) die Überprüfung durch einen Vergleich der erfassten Prüfsignale (18) mit einer Referenzsignalfolge (19) durchführt, welche in einem der Auswerteeinheit (3) zugeordneten Speicher (5) hinterlegt ist.

11. Verfahren gemäß einem der Ansprüche8 bis 10, **dadurch gekennzeichnet, dass** die Auswerteeinheit (3) die Rechnereinheit (2) zurücksetzt oder in einen sicheren Zustand versetzt, wenn sie im Rahmen der Überprüfung eine Abweichung der Prüfsignale (18) von der Referenzsignalfolge (19) feststellt.
